# FASCICULE DE BREVET EUROPEEN

(11) **EP 3 597 514 B1**
(45) Date de publication et mention de la délivrance du brevet: **19.10.2022**
(21) Numéro de dépôt: 19178459.4
(22) Date de dépôt: 05.06.2019
(51) Int. Cl.: B62D 33/023, G09F 21/04

(54) **REHAUSSE AVEC UN CADRE NOTAMMENT DESTINÉ À LA FABRICATION D'UN PANNEAU**
FÜLLRAHMEN FÜR EINEN RAHMEN, INSBESONDERE ZUR HERSTELLUNG EINES PANEELS
EXTENSION WITH A FRAME, IN PARTICULAR INTENDED FOR THE PRODUCTION OF A PANEL

(30) Priorité: 06.06.2018 FR 1854897
(43) Date de publication de la demande: 22.01.2020
(73) Titulaire: Ur'ben, 12800 Naucelle (FR)
(72) Inventeur: AUREJAC, Mathieu, 12800 Naucelle (FR)
(74) Mandataire: Plasseraud IP

(56) Documents cités:
- EP-A1- 0 267 152
- EP-A1- 2 724 335
- FR-A- 1 175 746
- FR-A1- 2 844 630
- US-A- 4 035 015

## Description

La présente invention concerne une rehausse avec un cadre, notamment un cadre destiné à la fabrication d'un panneau.

Le domaine dans lequel l'invention a été réalisée est le domaine des véhicules et plus particulièrement des bennes pour véhicules. Toutefois, comme il apparaitra à l'homme du métier, d'autres applications de l'invention sont tout à fait envisageables.

Dans le domaine des camions bennes, les bennes comportent des parois (sensiblement verticales au « repos »), appelées aussi ridelles, qui délimitent la benne avec un plancher. La hauteur de ces parois, par rapport au plancher est déterminée pour convenir à la plupart des utilisations du camion benne. Toutefois, lorsque des objets peu denses (par exemple branchages, ou autres) sont chargés dans la benne, la hauteur des parois peut être insuffisante. Il est alors connu d'utiliser des rehausses pour augmenter la hauteur des ridelles. Ces rehausses peuvent être prévues d'origine mais elles peuvent aussi être montées et démontées comme un accessoire. Une rehausse peut être adaptée à tout type de benne, le terme de benne étant à prendre au sens large, incluant tous les types de carrosseries destinées à transporter des matériaux et comportant éventuellement des ridelles (bennes, plateaux, remorques, bennes amovibles, ...).

Ces rehausses sont des pièces de grandes dimensions (longueur et hauteur mais faible épaisseur) et sont donc difficilement transportables. Quand elles sont expédiées et prises en charge par un transporteur, elles arrivent trop souvent abimées à destination.

Le problème à résoudre est alors de faciliter le transport de rehausses de ridelles. Une idée pour résoudre ce problème est de réaliser les rehausses en plusieurs pièces de taille restreinte de manière à pouvoir faire des colis plus compacts et de ce fait plus facilement transportables. Cependant, il convient de veiller à ce que les pièces de taille restreinte soient faciles à assembler les unes avec les autres pour obtenir une rehausse avec les mêmes caractéristiques d'aspect et mécaniques qu'une rehausse de l'art antérieur.

Une rehausse est généralement constituée d'un cadre sur lequel sont montées des grilles ou des plaques pleines ou ajourées.

Un problème technique à résoudre est donc de fournir une nouvelle structure de rehausse, réalisée en plusieurs pièces et facile à monter.

Ce problème technique peut se poser dans d'autres domaines techniques. Pour de l'événementiel par exemple, il peut être intéressant d'avoir des panneaux d'affichage faciles à transporter et à monter. On peut aussi réaliser ainsi des brises vues, pour un aménagement intérieur ou extérieur. D'autres applications sont encore envisageables.

Plus globalement, le problème est donc de fournir un cadre en plusieurs pièces facilement montable et pouvant être équipé de panneaux de remplissage de divers types (grilles, plaques pleines ou ajourées, ...).

À cet effet, la présente invention propose une rehausse de ridelle avec un cadre comportant au moins quatre pièces profilées assemblées les unes aux autres de manière à former un ensemble de forme rectangulaire avec quatre angles.

Selon la présente invention, à l'intérieur du profil d'au moins deux pièces profilées se trouve un logement de section de forme globalement circulaire,
les pièces profilés présentent des faces d'extrémité transversales,
dans chaque angle au moins une extrémité d'une pièce profilée est munie d'un passage de telle sorte qu'une vis puisse venir en prise dans le logement de section globalement circulaire d'une pièce profilée en ayant traversé l'autre pièce profilée.

Cette structure de cadre permet un assemblage sans pièce intermédiaire entre les pièces profilées. Une vis à chaque angle suffit pour obtenir un cadre rigide. Le montage en outre est aisé.

Selon l'invention, chaque pièce profilée présente deux nervures longitudinales parallèles s'étendant vers l'intérieur de la structure ; les nervures longitudinales d'une pièce profilée sont coplanaires avec les nervures longitudinales d'une autre pièce profilée, et dans chaque angle les nervures longitudinales d'au moins une pièce profilée sont raccourcies. La présence des nervures longitudinales sur tout le pourtour intérieur du cadre permet d'accueillir le bord périphérique d'une plaque, d'une grille ou similaire et de le maintenir rigidement sur tous ses côtés. Dans le cas d'une utilisation sur une benne de véhicule, il est important d'avoir un bon maintien pour éviter toutes vibrations de la plaque ou similaire par rapport à son cadre lorsque le véhicule se déplace.

Dans un tel cadre, les pièces profilées présentent avantageusement toutes un même profil transversal. Cette variante permet de limiter le prix de revient du cadre, une seule filière pour la réalisation des pièces profilées étant nécessaire.

Pour alléger la structure du cadre, on peut prévoir que chaque pièce profilée présente une zone tubulaire, et alors avantageusement chaque logement se trouve à l'intérieur d'une telle zone tubulaire.

Selon une forme de réalisation préférée, on a un cadre comportant au moins quatre pièces profilées assemblées les unes aux autres de manière à former un ensemble de forme rectangulaire avec quatre angles. Dans un tel cadre, chaque pièce profilée présente une zone tubulaire et deux nervures longitudinales parallèles s'étendant à partir de la zone tubulaire vers l'intérieur de la structure ;
à l'intérieur de la zone tubulaire d'au moins deux pièces profilées se trouve un logement de section de forme globalement circulaire ;
les pièces profilés présentent des faces d'extrémité transversales ;
dans chaque angle au moins une extrémité d'une pièce profilée est usinée de telle sorte que les nervures longitudinales d'au moins une pièce profilée sont raccourcies, et de telle sorte qu'une vis puisse venir en prise dans le logement de section globalement circulaire d'une pièce profilée en ayant traversé la zone tubulaire de l'autre pièce profilée, les nervures longitudinales d'une pièce profilée étant coplanaires des nervures longitudinales de l'autre pièce profilée.

Selon une forme de réalisation, il est prévu que chaque pièce profilée présente un profil transversal éventuellement tubulaire avec une forme globalement rectangulaire comportant deux grands côtés et deux petits côtés, les nervures longitudinales s'étendant à partir d'une face de la zone profilée correspondant à un petit côté du profil transversal. Une telle forme facilite l'assemblage des pièces profilées grâce aux faces sensiblement planes des pièces profilées.

Selon une variante de réalisation d'un profilé tubulaire, le logement de section globalement circulaire est disposé sensiblement au centre de la zone tubulaire et est relié aux parois de la zone tubulaire par une ou plusieurs ailes qui, avec le logement, séparent la zone tubulaire en deux compartiments ou cellules. Le fait d'avoir le logement en position centrale optimise la répartition des efforts de serrage lors de l'assemblage des pièces profilées. La présence de compartiments peut être mise à profit dans l'assemblage des pièces profilées (utilisation des ailes comme butées par exemple) et aussi pour servir de logement à un renfort, notamment pour l'assemblage de deux pièces profilées mises bout à bout.

Pour prévoir une interpénétration des pièces profilées dans les angles du cadre d'une forme de réalisation avec des nervures longitudinales et ainsi augmenter la rigidité de celui-ci, on peut par exemple prévoir qu'au moins une extrémité de pièce profilée est telle que chacune de ses deux nervures longitudinales sont raccourcies longitudinalement d'une longueur correspondant à la hauteur desdites nervures, et que la pièce profilée présente une fente débouchante dans le prolongement de chaque nervure raccourcie, ladite fente recevant à chaque fois une nervure d'une autre pièce profilée.

Pour des raisons esthétiques mais aussi pour éviter que de l'eau et des saletés pénètrent dans les zones tubulaires, le cadre avec des profilés tubulaires tel que défini ci-dessus comporte de préférence en outre quatre bouchons de fermeture montés chacun à une extrémité d'une zone tubulaire d'une pièce profilée.

La présente invention concerne une rehausse de ridelle comportant un cadre et un élément plan, caractérisée en ce que le cadre est un cadre tel que décrit dans les paragraphes précédents et en ce que l'élément plan est monté entre les pièces profilées du cadre de manière à remplir au moins partiellement l'espace délimité par les pièces profilées.

Selon une forme de réalisation d'une telle rehausse, il est prévu que le cadre comporte deux montants formés chacun par une pièce profilée, et deux traverses formées chacune par au moins deux pièces profilées de même profil transversal et disposées l'une dans le prolongement de l'autre,
qu'une pièce profilée supplémentaire s'étende parallèlement aux montants entre une première zone de jonction entre deux pièces profilées d'une traverse et une seconde zone de jonction entre deux pièces profilées de l'autre traverse,
que ladite pièce profilée supplémentaire présente une section en H comportant une zone centrale avec un logement de section de forme globalement circulaire,
que les extrémités des pièces profilées reliées par la pièce profilée supplémentaire sont munies d'un passage de manière à permettre à une vis d'accéder au logement de section de forme globalement circulaire de cette pièce profilée supplémentaire, et
que les extrémités des pièces profilées sont usinées de manière à coopérer avec la pièce profilée supplémentaire afin d'empêcher une séparation des pièces profilées de la traverse.

Cette forme de réalisation est plus particulièrement adaptée pour une rehausse présentant une grande longueur par rapport à sa hauteur. Dans cette forme de réalisation lorsque les pièces profilées du cadre présentent des nervures longitudinales, on peut prévoir que la pièce profilée supplémentaire présente deux parois latérales parallèles, correspondant aux deux barres verticales du H, espacées l'une de l'autre d'une distance supérieure à la distance séparant les faces extérieures de deux nervures d'une pièce profilée mais chaque paroi latérale présentant un rebord en saillie vers l'autre paroi latérale de telle sorte que la distance séparant les extrémités libres de deux rebords en saillie en vis-à-vis correspond sensiblement à la distance séparant les faces intérieures des deux nervures d'une pièce profilée, et que les nervures des pièces profilées correspondant à une traverse du cadre sont usinées de manière à présenter une fente transversale logeant un rebord en saillie d'une pièce profilée supplémentaire. Par usinage, on entend ici un enlèvement de matière et/ou une modification de forme réalisés à l'aide d'un ou plusieurs outil(s).

Comme évoqué plus haut, dans le cas d'un cadre avec des pièces profilées tubulaires, au moins une pièce de renfort (optionnelle) s'étendant à la fois dans la zone tubulaire d'une pièce profilée formant une traverse et dans la zone tubulaire de l'autre pièce profilée formant ladite traverse permet de renforcer la traverse, et une vis de fixation vissée dans le logement de section de forme globalement circulaire de la pièce profilée supplémentaire traverse alors de préférence chaque pièce de renfort.

Des détails et avantages de la présente invention apparaitront mieux de la description qui suit, faite en référence au dessin schématique annexé sur lequel :
La figure 1 est une vue en perspective éclatée d'une extrémité de rehausse pour ridelle,
La figure 2 est une vue de détail à échelle agrandie de la figure 1,
La figure 3 est une vue en perspective d'un montant,
La figure 4 est une vue en perspective d'un tronçon de traverse,
La figure 5 montre à échelle agrandie le profil du montant et d'un tronçon de traverse des figures 3 et 4,
La figure 6 illustre une première adaptation d'extrémité de pièce profilée,
La figure 7 illustre une deuxième adaptation d'extrémité de pièce profilée,
La figure 8 illustre une troisième adaptation d'extrémité de pièce profilée,
La figure 9 est une vue en coupe longitudinale d'un assemblage de deux pièces profilées pour former un cadre,
La figure 10 est une vue en perspective d'un montant intermédiaire,
La figure 11 illustre à échelle agrandie le profil du montant intermédiaire de la figure 10, et
La figure 12 est une vue en coupe longitudinale d'un assemblage de deux demi-traverses avec un montant intermédiaire.

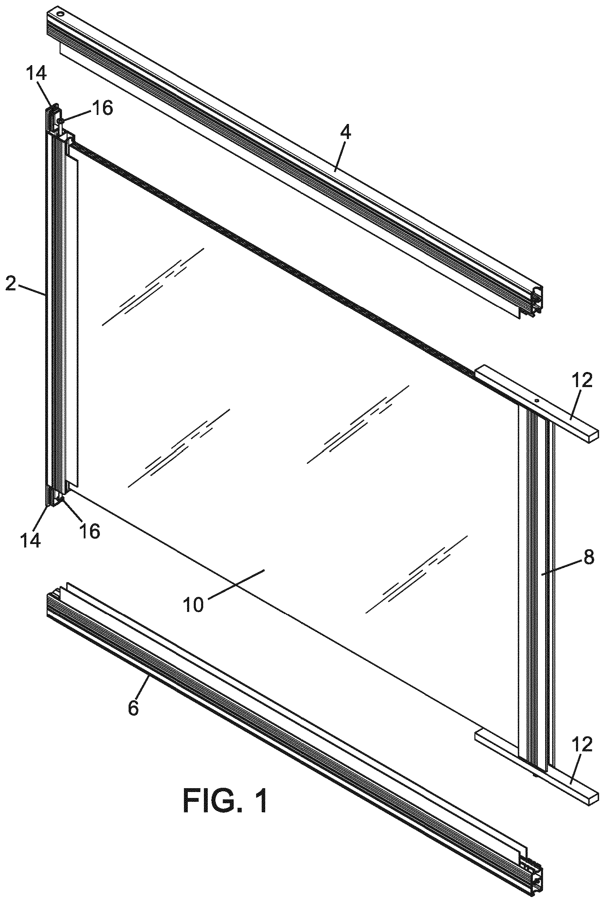

La figure 1 illustre seulement partiellement une rehausse de ridelle pour une benne (ou un plateau) de camion ou bien pour une remorque afin de ne pas surcharger la figure. Sur cette figure sont représentés un montant 2, une demi-traverse supérieure 4, une demi-traverse inférieure 6, un montant intermédiaire 8, une plaque 10, deux renforts appelés par la suite lardons 12, deux bouchons 14 et des vis 16. L'homme du métier comprendra de la description qui suit comment obtenir un panneau entier formant rehausse en rajoutant un autre montant, une autre demi-traverse supérieure, une autre demi-traverse inférieure, un autre panneau, deux autres bouchons et des vis de liaison symétriquement par rapport au montant intermédiaire 8 illustré.

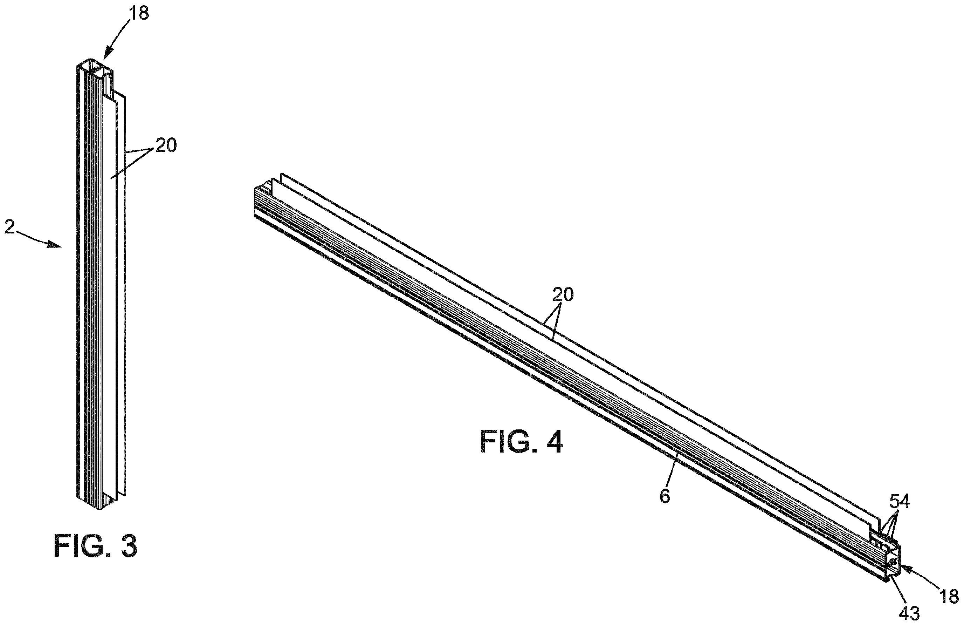

Le montant 2 est illustré seul sur la figure 3. Il s'agit d'une pièce profilée qui comporte, d'une part, un corps formé ici par une zone tubulaire 18 et, d'autre part, deux nervures longitudinales 20 qui s'étendent parallèlement et l'une en vis-à-vis de l'autre. Ce montant 2 peut être réalisé dans divers matériaux, métalliques (en acier ou bien dans un alliage léger, par exemple à base d'aluminium, ou bien autre) ou bien en matière synthétique ou composite.

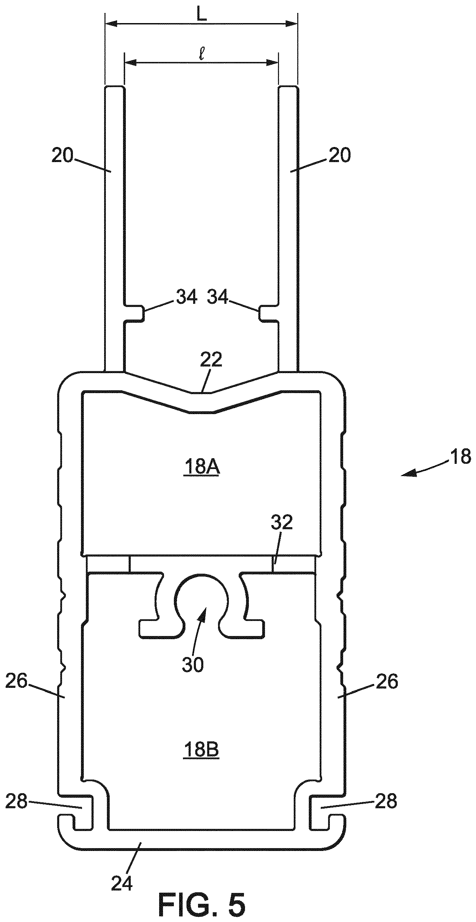

La zone tubulaire 18 présente dans la forme de réalisation préférée illustrée ici une section transversale de forme globalement rectangulaire. La figure 5 illustre une coupe transversale à travers le montant 2. On y reconnait la zone tubulaire 18 et les deux nervures longitudinales 20. La zone tubulaire 18 présente deux petits côtés et deux grands côtés définissant ainsi pour le montant 2 une face intérieure 22 correspondant au petit côté portant les nervures longitudinales 20, une face extérieure 24 opposée à la face intérieure et deux faces latérales 26 correspondant chacune à un grand côté du rectangle de la section transversale de la zone tubulaire 18. On remarque dans la forme de réalisation illustrée la présence de rainures 28 à chaque angle entre une face latérale 26 et la face extérieure 24. Ces rainures 28, optionnelles, peuvent être utilisées par exemple pour la fixation de la rehausse ou bien pour venir fixer un élément sur la rehausse.

Sensiblement au centre de la zone tubulaire, à l'intérieur de celle-ci, se trouve un logement 30 de forme globalement cylindrique circulaire. Ce logement 30 est ici défini par une paroi en forme d'oméga (Ω) et est ainsi ouvert d'un côté. Il est prévu pour recevoir une vis 16. Ce logement 30 peut être un logement tubulaire ou bien comme ici défini par une forme ouverte. La paroi de ce logement 30, pour pouvoir maintenir une vis, devra ainsi former un arc de cercle sur au moins 180°, de préférence sur au moins 200° et de manière encore préférée, comme illustrée ici, sur au moins 270°. Ce logement 30 est relié aux faces de la zone tubulaire 18 par un support avec deux ailes, une de chaque côté du logement 30, et qui forment une cloison 32 qui divise l'espace intérieur de la zone tubulaire 18 en deux cellules 18A et 18B. Dans le mode de réalisation illustré, la cloison 32 relie les deux faces latérales 26 et est parallèle à la face intérieure 22 et à la face extérieure 24. Toutefois, d'autres formes peuvent être envisagées pour les ailes (rattachement à une seule face, parallèle ou non à une face, ...) qui ne forment pas forcément une cloison.

Enfin, on remarque la présence au niveau de chaque nervure longitudinale 20 d'un rebord 34 qui s'étend sur chacune de ces nervures en direction de l'autre nervure. Ces rebords 34 sont destinés à servir de butée et/ou d'élément de verrouillage pour la plaque 10 qui vient prendre place entre les nervures longitudinales 20, comme illustré sur la figure 1.

La figure 4 illustre la demi-traverse inférieure 6 seule. Cette dernière est semblable à la demi-traverse supérieure 4. Ces demi-traverses sont également des pièces profilées. Elles sont de préférence réalisées dans le même matériau que le montant 2 et présentent avantageusement la même section, c'est-à-dire la section illustrée sur la figure 5.

Au moins certaines extrémités des pièces profilées (montant 2, demi-traverse supérieure 4 et demi-traverse inférieure 6) sont usinées (ce terme est à prendre au sens large ici et dans la suite de la description pour indiquer qu'une reprise de la pièce est réalisée à l'aide d'au moins un outil) pour pouvoir réaliser un assemblage de ces pièces afin de former un cadre. Il est proposé ici de réaliser trois usinages distincts et d'usiner toutes les extrémités de ces pièces profilées. Il s'agit d'une option préférée. On pourrait prévoir dans un assemblage de deux extrémités de pièce profilée pour former un angle du cadre d'avoir une extrémité non usinée (juste coupée à longueur) et une autre extrémité usinée pour s'adapter.

On remarque tout d'abord que les pièces profilées (montant 2, demi-traverse supérieure 4 et demi-traverse inférieure 6) sont coupées à longueur par une découpe transversale par rapport à la direction longitudinale des pièces profilées à toutes leurs extrémités.

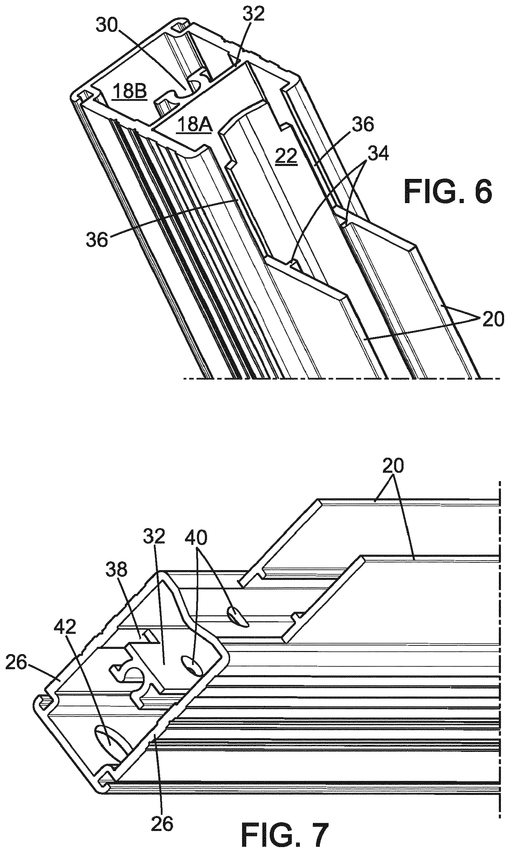

La figure 6 illustre une première adaptation d'extrémité. Il s'agit ici d'un travail, qui peut être réalisé par poinçonnage, au niveau des deux extrémités du montant 2 de la figure 1. Chaque extrémité du montant 2 est ici adaptée pour que les nervures longitudinales 20 de la demi-traverse supérieure 4 et de la demi-traverse inférieure 6 puissent pénétrer dans la zone tubulaire 18 du montant 2. Ainsi, les nervures longitudinales 20 du montant 2 sont raccourcies aux extrémités d'une longueur au moins égale à la hauteur des nervures longitudinales 20 des demi-traverses (qui est la même que celle des nervures longitudinales du montant 2) et qui correspond à la distance entre la face intérieure 22 et le bord libre des nervures longitudinales 20. En outre, deux fentes 36 sont découpées longitudinalement entre la face d'extrémité transversale du montant et les nervures longitudinales 20 dans la face intérieure 22 du montant pour permettre le passage des nervures transversales d'une demi-traverse. Il est proposé ici de ne pas réaliser de découpe dans la cloison 32 si bien que les nervures longitudinales des demi-traverses ne peuvent pénétrer que dans la première cellule 18A de la zone tubulaire 18 du montant 2. On remarque sur la figure 6 que les fentes 36 présentent une largeur plus importante du côté de la face d'extrémité du montant 2 afin de laisser un passage pour les rebords 34.

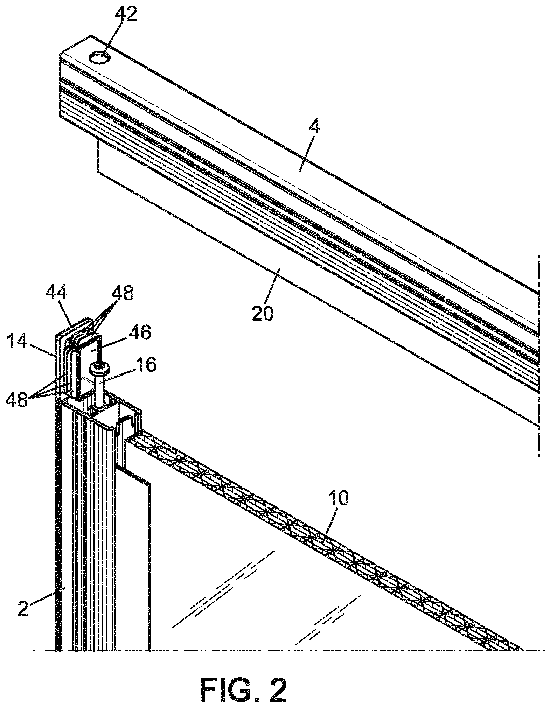

L'usinage, qui peut aussi être réalisé par poinçonnage, illustré avec la figure 7 est destiné à coopérer avec celui illustré sur la figure 6 comme montré sur la figure 2. Quatre opérations sont ici réalisées.

La cloison 32 est munie d'une encoche 38 à côté de chaque face latérale 26 pour permettre au bouchon 14 (décrit plus loin) de venir obturer la zone tubulaire 18 d'une demi-traverse à une extrémité de cette dernière.

Les nervures longitudinales 20 sont raccourcies d'une longueur qui dépend des dimensions de la zone tubulaire 18 du montant 2, de la cellule 18A et du bouchon 14 comme expliqué plus loin.

Un premier perçage 40 est réalisé dans la face intérieure 22, la cloison 32 et la face extérieure 24 de la zone tubulaire 18 de la demi-traverse concernée pour permettre le passage d'un corps de vis (vis 16). La position du premier perçage 40 est définie pour permettre un accès au logement 30 du montant 2.

Enfin, un second perçage 42 est réalisé uniquement dans la face extérieure 24, coaxialement au premier perçage 40, pour permettre le passage d'une tête de vis (vis 16), le premier perçage 40 ne permettant pas ce passage de tête de vis.

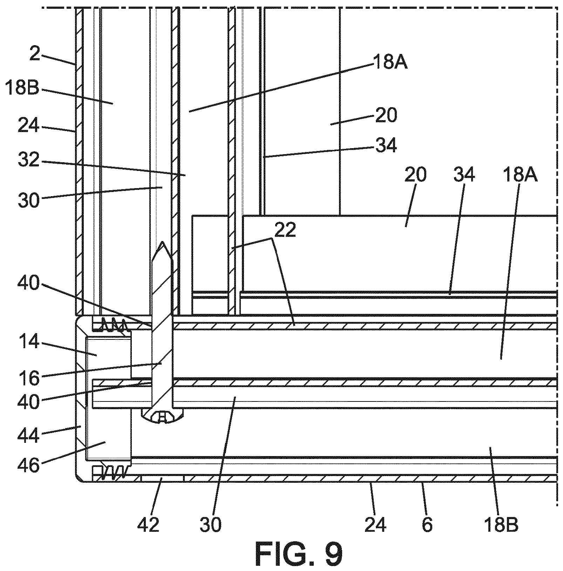

Chaque bouchon 14 représenté par exemple sur la figure 9 a pour but de fermer une extrémité d'une zone tubulaire 18. Chaque bouchon présente ainsi une plaque de fermeture 44 dont le contour extérieur correspond sensiblement au contour extérieur de la zone tubulaire 18. À partir de cette plaque de fermeture 44, s'étend sur une face de cette plaque, une protrusion 46 de contour sensiblement rectangulaire et creuse à l'intérieur dont les dimensions permettent une introduction de ladite protrusion 46 à l'intérieur de la zone tubulaire au niveau d'une extrémité usinée comme illustré sur la figure 7 et comportant alors des encoches 38. Des lamelles 48, déformables élastiquement, sont prévues sur chaque face extérieure de la protrusion 46 pour venir assurer une étanchéité entre ladite protrusion 46 et la face intérieure de la zone tubulaire 18.

Les figures 2 et 9 illustrent un assemblage d'une demi-traverse avec le montant 2. Sur la vue éclatée de la figure 2, la demi-traverse supérieure 4 est écartée pour montrer le positionnement de la plaque 10 entre les nervures longitudinales 20 du montant 2. Sur la vue en coupe de la figure 9, la plaque 10 n'est pas représentée pour mieux voir les nervures longitudinales 20.

Comme on le voit mieux sur la figure 9, lorsque le montant 2 est assemblé avec une demi-traverse, ici la demi-traverse inférieure 6, les extrémités des nervures longitudinales 20 de la demi-traverse inférieure 6 sont logées dans la cellule 18A du montant 2 en passant à travers les fentes 36 de ce montant 2. Les nervures longitudinales 20 du montant 2 viennent quant à elles s'étendre jusqu'à venir au contact (ou quasiment au contact) des nervures longitudinales 20 de la demi-traverse inférieure 6. Une vis 16, introduite en passant dans les premiers perçages 40 de la demi-traverse inférieure 6, vient en prise dans le logement 30 du montant 2. Le bouchon 14 vient obturer la zone tubulaire 18 de la demi-traverse inférieure 6, la zone tubulaire 18 du montant 2 étant fermée par la face intérieure 22 de la demi-traverse inférieure 6. Dans cette position assemblée, la position des perçages dans la demi-traverse inférieure 6 est telle que la face extérieure de la plaque de fermeture 44 du bouchon 14 vienne affleurer avec la face extérieure 24 de la zone tubulaire 18 du montant 2. La longueur des nervures longitudinales 20 de cette demi-traverse inférieure 6 est également adaptée pour permettre cet affleurement (et l'introduction de la vis 16 dans le logement 30 correspondant).

Il est possible de former un cadre avec deux montants 2 et deux traverses qui seraient adaptées à chacune de leurs extrémités comme illustré sur la figure 7. On aurait alors aux quatre coins du cadre un assemblage tel qu'illustré sur les figures 2 et 9.

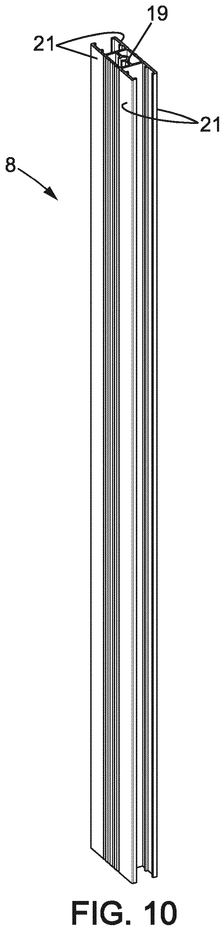

Toutefois, pour des rehausses de grande longueur, ou plus généralement pour pouvoir avoir un ensemble démonté de taille plus compacte, il est proposé ici d'avoir des traverses en plusieurs pièces, deux ou plus. Il est dans ce cas proposé d'avoir alors au moins un montant intermédiaire 8 qui est plus particulièrement illustré sur les figures 10 et 11, la figure 12 illustrant un assemblage d'un tel montant intermédiaire 8 avec deux demi-traverses inférieures.

La figure 10 illustre un montant intermédiaire 8 en perspective. Cette pièce profilée additionnelle n'est pas forcément réalisée dans le même matériau que les montants 2. Elle peut être par exemple aussi réalisée dans le même matériau que la (les) plaque(s) 10, ou bien encore dans un autre matériau, métallique ou non.

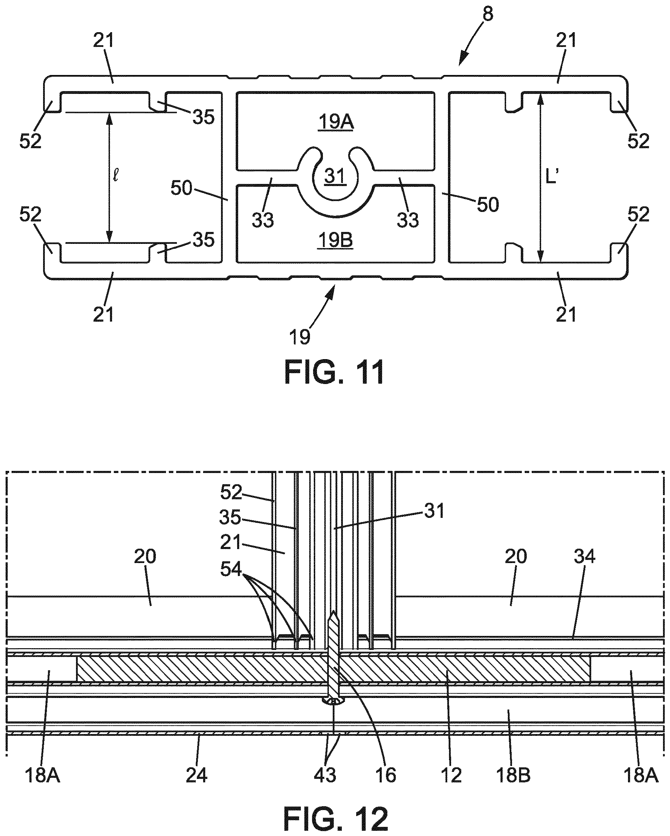

Ce montant intermédiaire 8 présente deux flancs latéraux parallèles reliés par une traverse tubulaire 19. La section transversale de ce montant intermédiaire 8 présente ainsi une forme globale en H comme illustré sur la figure 11. Dans cette section, les parties des flancs latéraux qui font saillie au-delà de la traverse tubulaire 19 forment ainsi quatre bras 21.

La traverse tubulaire 19 présente une section de forme globale rectangulaire. Elle est délimitée par les flancs latéraux et par deux parois internes 50 perpendiculaires aux flancs latéraux. Un logement 31 est réalisé dans la traverse tubulaire 19, sensiblement au centre de celle-ci. Il reprend sensiblement la forme du logement 30, c'est-à-dire une forme cylindrique circulaire, de même diamètre que le logement 30 de manière à pouvoir coopérer avec des vis du même type que les vis 16 utilisées pour le logement 30. Ici le logement 31 est réalisé au cœur d'une paroi en forme de C. On retrouve donc une forme de logement ouverte qui donne une élasticité à ce logement qui peut être mise à profit lors d'une fixation par vissage. Ce logement 31 est relié aux parois internes 50 par des pontets 33 qui, avec la paroi du logement 31, divisent l'intérieur de la traverse tubulaire 19 en deux cellules 19A et 19B.

Les bras 21 sont tous similaires. Ils s'étendent à partir de la traverse tubulaire 19 et présentent un retour 52 à leur extrémité libre en direction du bras 21 lui faisant face ainsi qu'un rebord 35 en saillie vers l'autre bras 21. La largeur ℓ entre les retours 52 et entre les rebords 35 de deux bras 21 se trouvant en vis-à-vis correspond sensiblement à la largeur ℓ entre deux nervures longitudinales 20 d'un montant 2 ou d'une demi-traverse (cf. figure 5 et 11). La largeur L' entre les bras 21, mesurée à la base des rebords 35 comme illustré sur la figure 11 est du même ordre de grandeur mais de préférence légèrement plus grande que la largeur hors tout L, c'est-à-dire la distance séparant deux faces extérieures de nervures longitudinales 20 (figure 5) d'un montant 2 ou d'une demi-traverse.

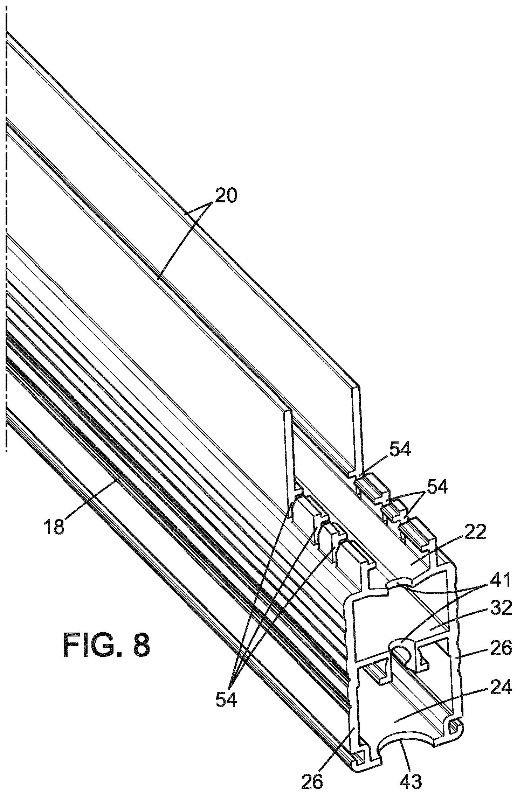

Un montant intermédiaire 8 est destiné à coopérer avec des extrémités de pièces profilées telles qu'illustrées sur la figure 8. L'usinage réalisé en extrémité de profilé consiste à former des languettes dans les nervures longitudinales 20 et à faire des demi-perçages.

Pour former des languettes, des fentes transversales 54 sont réalisées au nombre de trois : une pour accueillir une paroi interne 50, une pour recevoir un rebord 35 et une autre pour un retour 52. Il est prévu ici de raccourcir la hauteur des languettes réalisées en les coupant pour ne pas risquer de coincement lors de l'emboitement d'un montant intermédiaire 8 sur une extrémité de pièce profilée. L'imbrication des languettes et des parois du montant intermédiaire 8 empêche l'écartement (selon la direction longitudinale) des deux demi-traverses inférieures 6 et 6'.

On réalise en outre des demi-perçages 41 et des demi-perçages 43 de telle sorte qu'en mettant côte à côte deux extrémités de pièces profilées adaptées comme illustré sur la figure 8 on obtienne un perçage circulaire pour le passage d'une vis 16. Les dimensions des demi-perçages sont telles qu'en mettant côte à côte deux demi-perçages 41 on retrouve sensiblement le diamètre d'un premier perçage 40 et en mettant côte à côte deux demi-perçages 43 on retrouve sensiblement le diamètre d'un second perçage 42, les demi-perçages 41 étant réalisés dans la face intérieure 22, la cloison 32 et la face extérieure 24 de la zone tubulaire 18 tandis que le demi-perçage 43 est réalisé uniquement dans la face extérieure 24.

Dans l'assemblage de deux demi-traverses inférieures 6 et 6' et d'un montant intermédiaire 8, il est proposé d'utiliser, outre une vis 16, un lardon 12 (ou plusieurs) de manière optionnelle. Ce lardon 12 est destiné à prendre place dans les cellules 18A et/ou 18Ben étant au contact des faces latérales 26 pour rigidifier la liaison entre les deux demi-traverses inférieures 6 et 6'. Il est muni de préférence en son centre d'un alésage pour permettre le passage d'un corps de vis 16. Il peut être de forme parallélépipédique, être plein ou creux, avoir des points d'appui sur la cloison 32 et/ou sur la face intérieure 22, etc.

L'assemblage du montant intermédiaire 8 avec des demi-traverses est comme déjà écrit illustré par la vue en coupe de la figure 12. Ici les deux demi-traverses inférieures 6 et 6' sont mises bout à bout, un lardon 12 étant coulissé dans une cellule 18A de chacune des demi-traverses de telle sorte que l'alésage réalisé dans le lardon soit aligné avec les demi-perçages réalisés dans les extrémités des pièces profilées (demi-traverses inférieures 6 et 6'). Les retours 52, les rebords 35 et les parois internes 50 du montant intermédiaire 8, plus précisément leurs extrémités, viennent se loger dans les fentes transversales 54 réalisées dans les nervures longitudinales 20 (cf. figure 8) des demi-traverses inférieures 6 et 6'. La vis 16, en prise dans le logement 31 du montant intermédiaire 8 permet de maintenir solidement cet assemblage.

L'homme du métier comprendra que les deux demi-traverses inférieures 6 et 6' n'ont pas forcément la même longueur. Il peut aussi y avoir trois (ou plus) « demi- »traverses pour former une traverse. Le montage proposé ici au niveau d'une traverse inférieure est le même que celui qui est à prévoir au niveau d'une traverse supérieure qui peut être elle-aussi réalisée en plusieurs pièces (deux ou plus). Bien entendu, il y aura une symétrie entre les pièces formant la traverse supérieure et celles formant la traverse inférieure pour avoir des montants intermédiaires parallèles aux montants. Il peut être aussi envisagé d'avoir des montants réalisés en plusieurs pièces mises bout à bout.

Avec le système décrit ci-dessus, il est possible de réaliser un cadre rigide pour un panneau (plaque pleine, plaque ajourée, grille à mailles fines ou grossières, ...) avec uniquement des profilés (aux extrémités usinées) assemblés par des vis, sans nécessiter de pièces de liaison. Toutes les pièces du cadre peuvent être réalisées à partir d'un même profil.

Pour un cadre présentant une grande longueur par rapport à la hauteur, il est proposé d'utiliser des montants intermédiaires avec de préférence un profil supplémentaire. Toutefois, il convient de remarquer qu'il serait possible d'utiliser le même profil en mettant deux profils dos à dos pour réaliser les montants intermédiaires. Cette solution fonctionnerait techniquement mais la construction serait un peu plus longue et plus lourde.

Cette structure peut être facilement montée. Il peut donc être envisagé pour le fabricant de l'expédier à ses clients démontée. Les diverses pièces profilées, les plaques (entre deux montants, ou entre un montant et un montant intermédiaire, ou entre deux montants intermédiaires, il peut y avoir une ou plusieurs plaques mises côte à côte), les bouchons, les lardons et les vis peuvent être rassemblés dans un colis relativement compact et qui peut voyager sans crainte.

La structure décrite ci-dessus a été conçue comme rehausse de ridelle à l'origine mais peut trouver d'autres applications comme panneau, dans le domaine automobile (comme évoqué au préambule, pour équiper par exemple un plateau ou une remorque) mais aussi dans d'autres domaines (événementiel par exemple pour créer des parois mobiles).

L'assemblage au niveau de chaque jonction se fait avec une seule vis dans la description ci-dessus. Toutefois il pourrait être envisagé dans certains cas d'utiliser deux (ou plus) vis d'assemblage. Dans ce cas, les profilés sont adaptés pour présenter alors le nombre nécessaire de logements.

La présente invention ne se limite pas à la forme de réalisation préférée décrite ci-dessus à titre d'exemple non limitatif et aux variantes évoquées. Elle concerne également toutes les variantes à la portée de l'homme du métier dans le cadre des revendications ci-après.

## Revendications

1. Rehausse de ridelle comportant un cadre et un élément plan (10), le cadre comportant au moins quatre pièces profilées (2, 4, 6, 6') assemblées les unes aux autres de manière à former un ensemble de forme rectangulaire avec quatre angles, **caractérisée en ce qu'**à l'intérieur du profil d'au moins deux pièces profilées se trouve un logement (30) de section de forme globalement circulaire, **en ce que** les pièces profilées présentent des faces d'extrémités transversales, **en ce que** dans chaque angle au moins une extrémité d'une pièce profilée est munie d'un passage de telle sorte qu'une vis (16) puisse venir en prise dans le logement (30) de section globalement circulaire d'une pièce profilée en ayant traversé l'autre pièce profilée, **en ce que** chaque pièce profilée (2, 4, 6, 6') présente deux nervures longitudinales parallèles s'étendant vers l'intérieur de la structure, **en ce que** les nervures longitudinales (20) d'une pièce profilée sont coplanaires avec les nervures longitudinales (20) d'une autre pièce profilée, **en ce que** dans chaque angle les nervures longitudinales (20) d'au moins une pièce profilée sont raccourcies, et **en ce que** l'élément plan (10) est monté entre les pièces profilées (2, 4, 6, 6') du cadre de manière à remplir au moins partiellement l'espace délimité par les pièces profilées (2, 4, 6, 6').

2. Rehausse de ridelle selon la revendication 1, **caractérisée en ce que** les pièces profilées (2, 4, 6, 6') présentent toutes un même profil transversal.

3. Rehausse de ridelle selon l'une des revendications 1 ou 2, **caractérisée en ce que** chaque pièce profilée (2, 4, 6, 6') présente une zone tubulaire (18), et **en ce que** chaque logement (30) se trouve à l'intérieur d'une telle zone tubulaire (18).

4. Réhausse de ridelle selon l'une des revendications 1 à 3, **caractérisée en ce que** chaque pièce profilée (2, 4, 6, 6') présente un profil transversal, éventuellement tubulaire, avec une forme globalement rectangulaire comportant deux grands côtés et deux petits côtés, les nervures longitudinales (20) s'étendant à partir d'une face de la zone profilée correspondant à un petit côté du profil transversal.

5. Réhausse de ridelle selon la revendication 2, **caractérisée en ce que** le logement (30) de section globalement circulaire est disposé sensiblement au centre de la zone tubulaire (18) et est relié aux parois (22, 24, 26) de la zone tubulaire par une ou plusieurs ailes (32) qui, avec le logement (30), séparent la zone tubulaire (18) en deux cellules (18A, 18B).

6. Réhausse de ridelle selon l'une des revendications 1 à 5, **caractérisée en ce qu'**au moins une extrémité de pièce profilée est telle que chacune de ses deux nervures longitudinales (20) sont raccourcies longitudinalement d'une longueur correspondant à la hauteur desdites nervures, et **en ce que** la pièce profilée présente une fente (36) débouchante dans le prolongement de chaque nervure raccourcie, ladite fente (36) recevant à chaque fois une nervure longitudinale (20) d'une autre pièce profilée.

7. Réhausse de ridelle selon la revendication 2, **caractérisée en ce qu'**il comporte en outre quatre bouchons (14) de fermeture montés chacun à une extrémité d'une zone tubulaire (18) d'une pièce profilée (2, 4, 6, 6').

8. Rehausse de ridelle selon l'une des revendications 1 à 7, **caractérisée en ce que** le cadre comporte deux montants (2) formés chacun par une pièce profilée, et deux traverses formées chacune par au moins deux pièces profilées (6, 6') de même profil transversal et disposées l'une dans le prolongement de l'autre,
**en ce qu'**une pièce profilée supplémentaire (8) s'étend parallèlement aux montants (2) entre une première zone de jonction entre deux pièces profilées d'une traverse et une seconde zone de jonction entre deux pièces profilées de l'autre traverse,
**en ce que** ladite pièce profilée supplémentaire (8) présente une section en H comportant une zone centrale (19) avec un logement (31) de section de forme globalement circulaire, et
**en ce que** les extrémités des pièces profilées (6, 6') reliées par la pièce profilée supplémentaire (8) sont munies d'un passage de manière à permettre à une vis d'accéder au logement (31) de section de forme globalement circulaire de cette pièce profilée supplémentaire (8).

9. Rehausse de ridelle selon la revendication 8, **caractérisée en ce que** la pièce profilée supplémentaire (8) présente deux parois latérales parallèles, correspondant aux deux barres verticales du H, espacées l'une de l'autre d'une distance supérieure à la distance séparant les faces extérieures de deux nervures longitudinales (20) d'une pièce profilée mais chaque paroi latérale présentant un rebord (35, 52) en saillie vers l'autre paroi latérale de telle sorte que la distance séparant les extrémités libres de deux rebords (35, 52) en saillie en vis-à-vis correspond sensiblement à la distance séparant les faces intérieures des deux nervures longitudinales (20) d'une pièce profilée, et **en ce que** les nervures longitudinales (20) des pièces profilées (6, 6') correspondant à une traverse du cadre sont usinées de manière à présenter une fente transversale (54) logeant un rebord (35, 52) en saillie d'une pièce profilée supplémentaire (8).

10. Rehausse de ridelle selon l'une des revendications 1 à 9, **caractérisée en ce que** les pièces profilées (2, 4, 6, 6') présentent toutes un même profil transversal, **en ce que** la rehausse de ridelle comporte au moins une pièce de renfort (12) s'étendant à la fois dans la zone tubulaire (18) d'une pièce profilée (6, 6') formant une traverse et dans la zone tubulaire (18) de l'autre pièce profilée (6, 6') formant ladite traverse, et **en ce qu'**une vis (16) de fixation vissée dans le logement (31) de section de forme globalement circulaire de la pièce profilée supplémentaire (8) traverse chaque pièce de renfort (12).

## Patentansprüche

1. Seitenwandfüllrahmen, umfassend einen Rahmen und ein ebenes Element (10), wobei der Rahmen mindestens vier Profilteile (2, 4, 6, 6') umfasst, die derart aneinandergefügt sind, dass sie eine Anordnung mit rechteckiger Form mit vier Ecken ausbilden, **dadurch gekennzeichnet, dass** sich im Inneren des Profils von mindestens zwei Profilteilen eine Aufnahme (30) mit einem im Allgemeinen kreisförmigen Querschnitt befindet, dass die Profilteile quer verlaufende Endflächen aufweisen, dass in jeder Ecke mindestens ein Ende eines Profilteils derart mit einem Durchlass versehen ist, dass eine Schraube (16) mit der Aufnahme (30) mit einem im Allgemeinen kreisförmigen Querschnitt eines Profilteils in Eingriff gebracht werden kann, wenn sie das andere Profilteil durchdrungen hat, dass jedes Profilteil (2, 4, 6, 6') zwei parallele Längsrippen aufweist, die sich zum Inneren der Struktur erstrecken, dass die Längsrippen (20) eines Profilteils mit den Längsrippen (20) eines anderen Profilteils koplanar sind, dass in jeder Ecke die Längsrippen (20) von mindestens einem Profilteil verkürzt sind und dass das ebene Element (10) derart zwischen den Profilteilen (2, 4, 6, 6') des Rahmens montiert ist, dass der durch die Profilteile (2, 4, 6, 6') begrenzte Raum mindestens teilweise ausgefüllt ist.

2. Seitenwandfüllrahmen nach Anspruch 1, **dadurch gekennzeichnet, dass** die Profilteile (2, 4, 6, 6') alle ein gleiches Querprofil aufweisen.

3. Seitenwandfüllrahmen nach einem der Ansprüche 1 oder 2, **dadurch gekennzeichnet, dass** jedes Profilteil (2, 4, 6, 6') einen röhrenförmigen Bereich (18) aufweist und dass sich jede Aufnahme (30) im Inneren eines derartigen röhrenförmigen Bereichs (18) befindet.

4. Seitenwandfüllrahmen nach einem der Ansprüche 1 bis 3, **dadurch gekennzeichnet, dass** jedes Profilteil (2, 4, 6, 6') ein Querprofil, das möglicherweise röhrenförmig ist, mit einer im Allgemeinen rechteckigen Form, die zwei lange Seiten und zwei kurze Seiten umfasst, aufweist, wobei sich die Längsrippen (20) von einer Fläche des Profilbereichs erstrecken, die einer kurzen Seite des Querprofils entspricht.

5. Seitenwandfüllrahmen nach Anspruch 2, **dadurch gekennzeichnet, dass** die Aufnahme (30) mit einem im Allgemeinen kreisförmigen Querschnitt im Wesentlichen im Mittelpunkt des röhrenförmigen Bereichs (18) angeordnet ist und mit den Wänden (22, 24, 26) des röhrenförmigen Bereichs durch einen oder mehrere Schenkel (32) verbunden ist, die mit der Aufnahme (30) den röhrenförmigen Bereich (18) in zwei Zellen (18A, 18B) teilen.

6. Seitenwandfüllrahmen nach einem der Ansprüche 1 bis 5, **dadurch gekennzeichnet, dass** mindestens ein Ende des Profilteils derart beschaffen ist, dass jede seiner zwei Längsrippen (20) in Längsrichtung um eine Länge verkürzt ist, die der Höhe der Rippen entspricht, und dass das Profilteil einen Spalt (36) aufweist, der in die Verlängerung jeder verkürzten Rippe mündet, wobei der Spalt (36) jeweils eine Längsrippe (20) von einem anderen Profilteil aufnimmt.

7. Seitenwandfüllrahmen nach Anspruch 2, **dadurch gekennzeichnet, dass** er unter anderem vier Verschlusskappen (14) umfasst, die jeweils an einem Ende eines röhrenförmigen Bereichs (18) eines Profilteils (2, 4, 6, 6') montiert sind.

8. Seitenwandfüllrahmen nach einem der Ansprüche 1 bis 7, **dadurch gekennzeichnet, dass** der Rahmen zwei Pfosten (2), die jeweils durch ein Profilteil ausgebildet sind, und zwei Querträger umfasst, die jeweils durch mindestens zwei Profilteile (6, 6'), die das gleiche Querprofil aufweisen und von denen eines in Verlängerung des anderen angeordnet ist, ausgebildet sind,
dass sich ein zusätzliches (8) Profilteil parallel zu den Pfosten (2) zwischen einem ersten Verbindungsbereich zwischen zwei Profilteilen eines Querträgers und einem zweiten Verbindungsbereich zwischen zwei Profilteilen des anderen Querträgers erstreckt,
dass das zusätzliche (8) Profilteil einen Querschnitt in H-Form aufweist, der einen mittleren Bereich (19) mit einer Aufnahme (31) mit einem im Allgemeinen kreisförmigen Querschnitt umfasst, und
dass die Enden der Profilteile (6, 6'), die durch das zusätzliche (8) Profilteil verbunden werden, derartig mit einem Durchlass versehen sind, dass einer Schraube ermöglicht wird, zu der Aufnahme (31) mit einem im Allgemeinen kreisförmigen Querschnitt dieses zusätzlichen (8) Profilteils zu gelangen.

9. Seitenwandfüllrahmen nach Anspruch 8, **dadurch gekennzeichnet, dass** das zusätzliche (8) Profilteil zwei parallele seitliche Wände aufweist, die den zwei vertikalen Stäben des H entsprechen, mit einer Entfernung voneinander beabstandet sind, die größer als die Entfernung ist, die die Außenflächen der zwei Längsrippen (20) eines Profilteils trennt, wobei jedoch jede seitliche Wand eine derart zu der anderen seitlichen Wand überstehende Kante (35, 52) aufweist, dass die Entfernung, die die zwei freien Enden der zwei überstehenden gegenüberliegenden Kanten (35, 52) trennt, im Wesentlichen der Entfernung entspricht, die die Innenflächen der zwei Längsrippen (20) eines Profilteils trennt, und dass die Längsrippen (20) der Profilteile (6, 6'), die einem Querträger des Rahmens entsprechen, derart gefertigt sind, dass sie einen Querspalt (54) aufweisen, der eine überstehende Kante (35, 52) eines zusätzlichen (8) Profilteils aufnimmt.

10. Seitenwandfüllrahmen nach einem der Ansprüche 1 bis 9, **dadurch gekennzeichnet, dass** die Profilteile (2, 4, 6, 6') alle ein gleiches Querprofil aufweisen, dass der Seitenwandfüllrahmen mindestens ein Verstärkungsteil (12) umfasst, das sich gleichzeitig in den röhrenförmigen Bereich (18) eines Profilteils (6, 6') erstreckt, das einen Querträger ausbildet, und in den röhrenförmigen Bereich (18) des anderen Profilteils (6, 6'), das den Querträger ausbildet, und dass eine Befestigungsschraube (16), die in die Aufnahme (31) mit einem im Allgemeinen kreisförmigen Querschnitt des zusätzlichen (8) Profilteils geschraubt ist, jedes Verstärkungsteil (12) durchdringt.

## Claims

1. A sideboard extension including a frame and a planar element (10), the frame including at least four profile parts (2, 4, 6, 6') assembled to each other so as to form a rectangular shaped assembly with four corners, **characterised in that** inside the profile of at least two profile parts there is a housing (30) with an overall circular shaped section, **in that** the profile parts have transverse end faces, **in that** in each corner of least one end of a profile part is fitted with a passageway so that a screw (16) can engage into the housing (30) with an overall circular section of a profile part after having passed through the other profile part, **in that** each profile part (2, 4, 6, 6') has two parallel longitudinal ribs extending inwardly of the structure, **in that** the longitudinal ribs (20) of a profile part are coplanar with the longitudinal ribs (20) of another profile part, **in that** in each corner the longitudinal ribs (20) of at least one profile part are shortened, and **in that** the planar element (10) is mounted between the profile parts (2, 4, 6, 6') of the frame so as to at least partially fill the space delimited by the profile parts (2, 4, 6, 6').

2. The sideboard extension according to claim 1, **characterised in that** the profile parts (2, 4, 6, 6') all have a same transverse profile.

3. The sideboard extension according to one of claims 1 or 2, **characterised in that** each profile part (2, 4, 6, 6') has a tubular zone (18), and **in that** each housing (30) is located inside such a tubular zone (18).

4. The sideboard extension according to one of claims 1 to 3, **characterised in that** each profile part (2, 4, 6, 6') has a transverse, optionally tubular, profile, with an overall rectangular shape including two long sides and two small sides, the longitudinal ribs (20) extending from a face of the profile zone corresponding to a small side of the transverse profile.

5. The sideboard extension according to claim 2, **characterised in that** the housing (30) with an overall circular section is disposed substantially in the centre of the tubular zone (18) and is connected to the walls (22, 24, 26) of the tubular zone through one or more wings (32) which, together with the housing (30), separate the tubular zone (18) into two cells (18A, 18B).

6. The sideboard extension according to one of claims 1 to 5, **characterised in that** at least one profile part end is such that each of its two longitudinal ribs (20) are longitudinally shortened by a length corresponding to the height of said ribs, and **in that** the profile part has a slot (36) opening as an extension of each shortened rib, said slot (36) each time receiving a longitudinal rib (20) of another profile part.

7. The sideboard extension according to claim 2, **characterised in that** it further includes four closing plugs (14) each mounted at one end of a tubular zone (18) of a profile part (2, 4, 6, 6').

8. The sideboard extension according to one of claims 1 to 7, **characterised in that** the frame includes two posts (2) each formed by a profile part, and two cross-members each formed by at least two profile parts (6, 6') with the same transverse profile and disposed one as an extension of the other,
**in that** an additional profile part (8) extends parallel to the posts (2) between a first junction zone between two profile parts of a cross-member and a second junction zone between two profile parts of the other cross-member,
**in that** said additional profile part (8) has a H section including a central zone (19) with a housing (31) with an overall circular shaped section, and
**in that** the ends of the profile parts (6, 6') connected by the additional profile part (8) are fitted with a passageway so as to enable a screw to access the housing (31) with an overall circular shaped section of this additional profile part (8).

9. The sideboard extension according to claim 8, **characterised in that** the additional profile part (8) has two parallel side walls, corresponding to the two vertical bars of the H, spaced apart from each other by a distance greater than a distance separating the external faces of two longitudinal ribs (20) of a profile part but each side wall having a rim (35, 52) protruding to the other side wall so that the distance separating the free ends of two facing protruding rims (35, 52) substantially corresponds to the distance separating the internal faces of the two longitudinal ribs (20) of a profile part, and **in that** the longitudinal ribs (20) of the profile parts (6, 6') corresponding to a cross-member of the frame are machined so as to have a transverse slot (54) housing a protruding rim (35, 52) of an additional profile part (8).

10. The sideboard extension according to one of claims 1 to 9, **characterised in that** the profile parts (2, 4, 6, 6') all have a same transverse profile, **in that** the sideboard extension includes at least one reinforcement part (12) extending both into the tubular zone (18) of a profile part (6, 6') forming a cross-member and into the tubular zone (18) of the other profile part (6, 6') forming said cross-member, and **in that** a fastening screw (16) screwed into the housing (31) with an overall circular shaped section of the additional profile part (8) passes through each reinforcement part (12).
